# EUROPEAN PATENT SPECIFICATION

(11) **EP 1 243 801 B1**
(45) Date of publication and mention of the grant of the patent: **06.04.2005**
(21) Application number: 01302504.4
(22) Date of filing: 19.03.2001
(51) Int. Cl.: F16B 13/06

(54) **Wedge anchor**
Spreizanker
Boulon d'ancrage expansible

(43) Date of publication of application: 25.09.2002
(73) Proprietor: Hsu, Tai-Ping, A-Lien Hsiang, Kaohsiung Hsien (TW)
(72) Inventor: Hsu, Tai-Ping, A-Lien Hsiang, Kaohsiung Hsien (TW)
(74) Representative: Viering, Jentschura & Partner

(56) References cited:
- EP-A- 0 627 567
- US-A- 3 750 519
- US-A- 5 314 278
- US-A- 6 027 292

## Description

The invention relates to a wedge anchor, more particularly to one that can be driven quickly into a blind hole and that can ensure a stable securing effect.

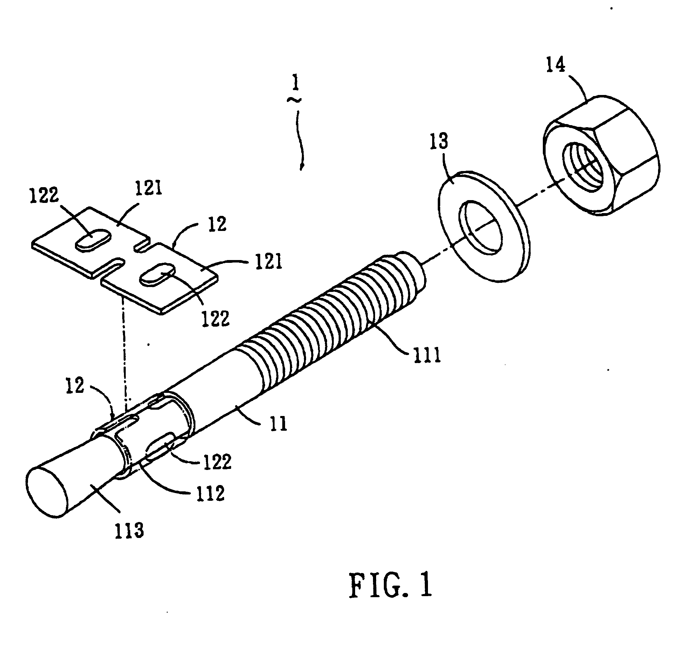

Referring to Figure 1, a conventional wedge anchor 1 is shown to include a shank 11, a tubular expansion sleeve 12, a washer 13, and a nut fastener 14. The shank 11 has a threaded section 111, a neck section 112 extending forwardly and coaxially from one end of the threaded section 111, and having a diameter slightly smaller than that of the threaded section 111, and an expander section 113 extending forwardly and coaxially from one end of the neck section 112. The expander section 113 has a frusto-conical configuration with a cross-section that gradually decreases along an axis of the shank 11 in a direction toward the threaded section 111. The expander section 113 further has a surface that forms an angle of less than 8° with respect to the axis of the shank 11. The expansion sleeve 12 is shorter than the shank 11, is sleeved on the neck section 112, and is formed from two interconnected retaining plates 121 that encircle the neck section 112. Each retaining plate 121 is formed with a boss 122 that projects radially and outwardly with respect to the shank 11. The washer 13 is sleeved on the shank 11, and the nut fastener 14 engages the threaded section 111 of the shank 11.

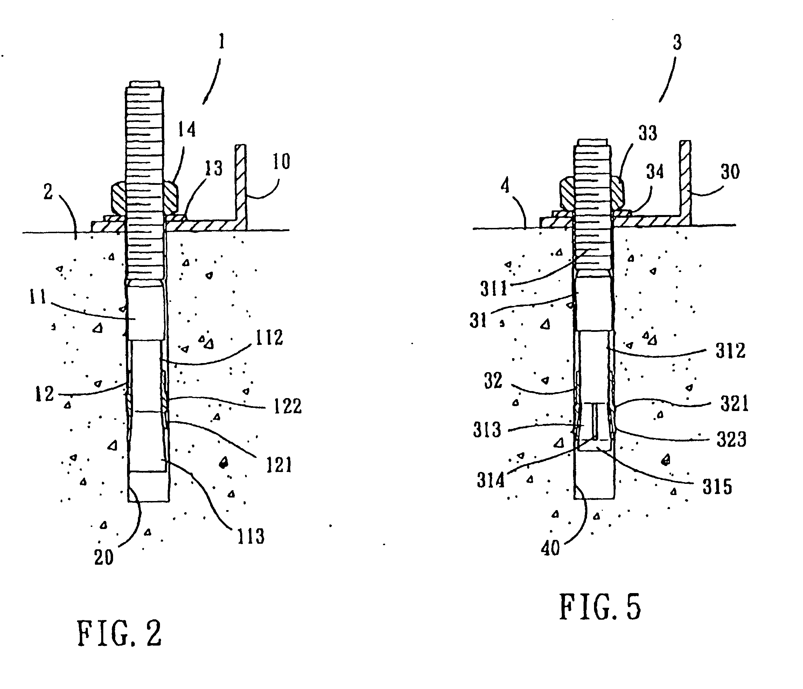

With further reference to Figure 2, in use, when mounting a bracket 10 on a wall 2, a blind hole 20, which has a diameter that corresponds to the outer diameter of the shank 11 when sleeved with the expansion sleeve 12, is initially drilled into the wall 2. Thereafter, with the expansion sleeve 12 disposed thereon, the shank 11 is driven into the blind hole 20 with the use of a mallet. By using a spanner to rotate the nut fastener 14 relative to the shank 11, a torque is generated so as to create a force for moving the shank 11 outwardly of the blind hole 20. At this time, movement of the shank 11 will cause the bosses 122 on the retaining plates 121 to engage the surface of the blind hole 20. Also, since an increasing cross-section of the expander section 113 extends into the expansion sleeve 12, the retaining plates 121 are forced by the expander section 113 to expand in a radial outward direction with respect to the shank 11 for engaging the surface of the blind hole 20. Subsequently, the nut fastener 14 and the washer 13 are removed from the shank 11, and the bracket 10 is disposed on the shank 11. The nut fastener 14 and the washer 13 are again provided on the shank 11 for locking tightly the bracket 10 against the wall 2 .

Other wedge anchors are described in the following references.

U.S. Patent 3,750,519 discloses an anchor bolt that includes an expansion sleeve having three circumferentially spaced wedging sections connected to a collar portion. Flattened bearing surfaces which diverge outwardly are located at a head portion of the bolt. When the expansion sleeve is moved toward the head portion, the bearing surfaces will cause the wedging sections to expand circumferentially.

U.S. Patent 5,314,278 discloses an expansible anchor comprising a shank and an expander cone. The anchor is used with an expansible sleeve comprising locking elements, a plurality of longitudinal slits and a plurality of notch-like indentations aligned with the slits. Tensile force exerted on the shank will cause the expansible sleeve to expand and thus allow the expander cone to enter the expansible sleeve.

U.S. 6,027,292 discloses an expansion anchor that comprises an anchor rod having a head that widens in an insertion direction and a sleeve having a plurality of expansion tabs which extend from a plastic hinge. The expansion tabs each have at least one groove-like depression extending along the axial length of the expansion tab. When the sleeve is pushed over the head, the expansion tabs expand radially.

Some of the drawbacks associated with the use of the aforesaid conventional wedge anchor 1 are as follows:
1. The surface of the expander section 113 of the shank 11 of the conventional wedge anchor 1 is smooth and the expansion sleeve 12 is formed with only two retaining plates 121 having only two bosses 122. Thus, when the nut fastener 14 is rotated, since the shank 11 is not held firmly in the blind hole 20, it is possible that the shank 11 will rotate with the nut fastener 14 and will rotate idly inside the blind hole 20 due to inadequate gripping with the surface of the blind hole 20. In addition, friction between the expander section 113 and the expansion sleeve 12 is relatively small. As such, due to lack of engagement between the expander section 113 and the expansion sleeve 12, when the nut fastener 14 is rotated, there is also a possibility that the expansion sleeve 12 will rotate idly relative to the shank 11, thereby preventing expansion of the retaining plates 121.
2. As mentioned hereinbefore, the expansion sleeve 12 is formed from two interconnected retaining plates 121 that encircle the neck section 112 of the shank 11. Because the arc lengths of the retaining plates 121 are relatively long, the retaining plates 121 are undesirably rigid and do not expand easily in the radial outward direction of the shank 11. As such, the surface of the expander section 113 cannot be formed with an angle that is greater than 8° with respect to the axis of the shank 11 since the larger angle will hinder expansion of the retaining plates 121. The smaller angle will result in a longer distance that is required to be traveled by the shank 11 for expanding the retaining plates 121. Thus, the conventional wedge anchor 1 takes up a relatively long amount of time for fixing on the wall 2.
3. Because a relatively long expander section 113 is needed to expand the retaining plates 121, the shank 11 has a relatively large material requirement, thereby resulting in increased costs. In addition, a relatively long length of the shank 11 projects from the wall 2 due to the relatively long distance traveled by the shank 11 when expanding the retaining plates 121. The relatively long projecting length of the shank 11 can hinder subsequent bracket mounting and locking operations.

Therefore, the object of the present invention is to provide a wedge anchor that can be driven quickly into a blind hole and that can ensure a stable securing effect.

This object is solved by a wedge anchor as defined in Claim 1.

According to the present invention, such a wedge anchor includes a shank, a tubular expansion sleeve, and a nut fastener. The shank has a threaded section, a neck section extending forwardly and coaxially from one end of the threaded section, and having a diameter smaller than that of the threaded section, and an expander section extending forwardly and coaxially from one end of the neck section, and having a cross-section that gradually decreases along an axis of the shank in a direction toward the threaded section. The expansion sleeve is shorter than the shank and is sleeved on the neck section. The nut fastener engages the threaded section of the shank.

The expander section has a surface that forms an angle greater than 8° with respect to the axis of the shank, and is further formed with a plurality of longitudinal ribs that project radially and outwardly, that extend along the axis of the shank, and that are angularly spaced apart from each other. The expansion sleeve is formed with a plurality of axially extending slits for engaging the longitudinal ribs on the expander section when the expander section is extended into the expansion sleeve. The slits configure the expansion sleeve with an annular base strip portion and more than two retaining plates, each having a base edge connected to the base strip portion, a pair of parallel lateral edges, and a curved distal edge that interconnects the lateral edges and that curves forwardly in a direction away from the base strip portion. The lateral edges of adjacent ones of the retaining plates confine the slits. The curved distal edges of the adjacent ones of the retaining plates cooperate to form entrances into the slits. Each of the retaining plates is formed with a boss that projects radially and outwardly with respect to the shank.

Other features and advantages of the present invention will become apparent in the following detailed description of the preferred embodiments with reference to the accompanying drawings, of which:
Figure 1 is an exploded perspective view illustrating a conventional wedge anchor;
Figure 2 is a partly sectional schematic view illustrating the conventional wedge anchor of Figure 1 when driven into a blind hole;
Figure 3 is an exploded perspective view illustrating the first preferred embodiment of a wedge anchor according to the present invention;
Figure 4 is a fragmentary schematic view illustrating a shank of the first preferred embodiment;
Figure 5 is a partly sectional schematic view illustrating the first preferred embodiment when driven into a blind hole;
Figure 6 is a fragmentary perspective view of the first preferred embodiment, illustrating an expansion sleeve thereof when in an expanded state; and
Figure 7 is an exploded perspective view illustrating the second preferred embodiment of a wedge anchor according to the present invention.

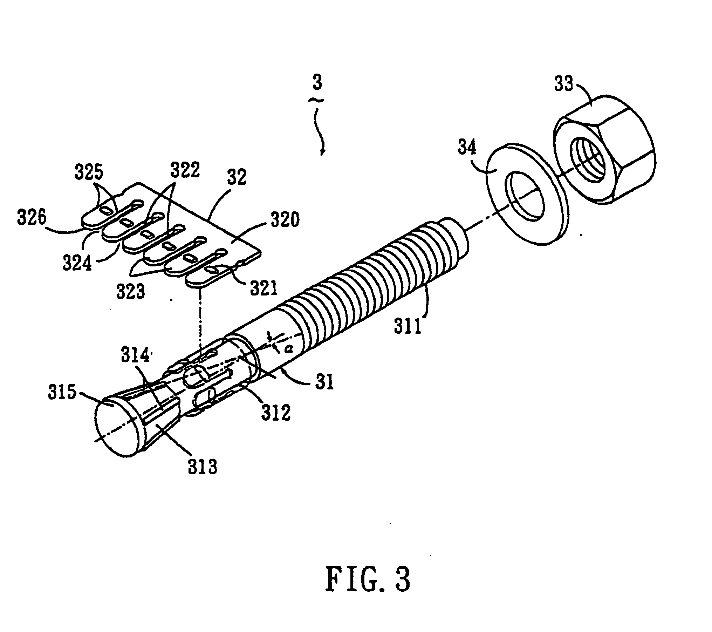

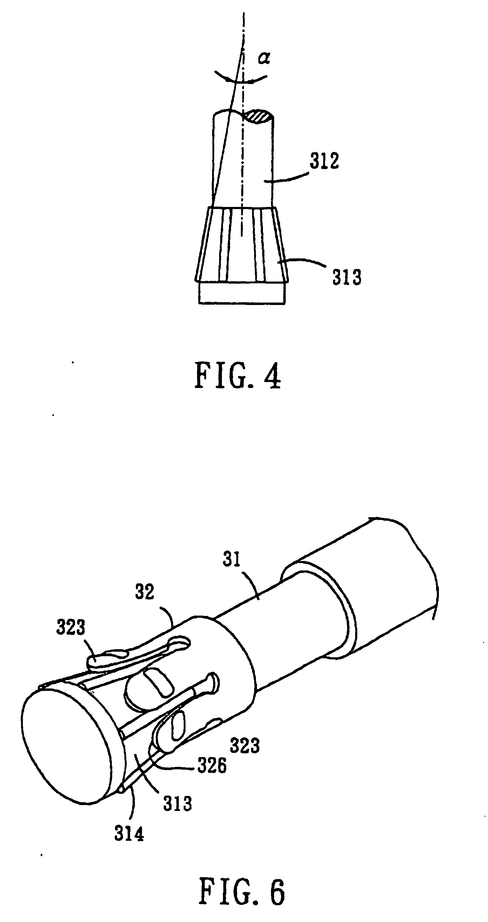

Referring to Figures 3 and 4, the first preferred embodiment of a wedge anchor 3 according to the present invention is shown to include a shank 31, a tubular expansion sleeve 32, a nut fastener 33 and a washer 34. The shank 31 has a threaded section 311, a neck section 312 extending forwardly and coaxially from one end of the threaded section 311, and having a diameter smaller than that of the threaded section 311, and an expander section 313 extending forwardly and coaxially from one end of the neck section 312, and having a cross-section that gradually decreases along the axis of the shank 31 in a direction toward the threaded section 311. The expansion sleeve 32 is shorter than the shank 31, and is sleeved on the neck section 312. The washer 34 is sleeved on the shank 31, and the nut fastener 33 engages the threaded section 311.

In this embodiment, the expander section 313 has a frusto-conical configuration, and has a largest diameter equal to that of the threaded section 311. The expander section 313 has a surface that forms an angle (α) greater than 8° with respect to the axis of the shank 31. Preferably, the angle (α) is between 10° and 22.5 °. More preferably, the angle (α) is between 10° and 15°. In the first preferred embodiment, the angle (α) is 10°. The expander section 313 is further formed with a plurality of longitudinal ribs 314 that project radially and outwardly, that extend along the axis of the shank 31, and that are angularly spaced apart from each other. The shank 31 further has a stop section 315 extending forwardly and coaxially from one end of the expander section 313 and having a diameter equal to that of the threaded section 311.

The expansion sleeve 32 is formed with a plurality of axially extending slits 322 for engaging the longitudinal ribs 314 on the expander section 313 when the latter is extended into the expansion sleeve 32. The slits 322 configure the expansion sleeve 32 with an annular base strip portion 320 and more than two retaining plates 323, each having a base edge connected to the base strip portion 320, a pair of parallel lateral edges 325, and a curved distal edge 326 that interconnects the lateral edges 325 and that curves forwardly in a direction away from the base strip portion 320. The lateral edges 325 of adjacent ones of the retaining plates 322 confine the slits 322. The curved distal edges 326 of the adjacent ones of the retaining plates 322 cooperate to form entrances 324 into the slits 322, respectively. Each of the retaining plates 322 is formed with a boss 321 that projects radially and outwardly with respect to the shank 31.

Each the longitudinal ribs 314 is engageable by one of the slits when the expander section is extended into the expansion sleeve.

With further reference to Figure 5, in use, when mounting a bracket 30 on a wall 4, a blind hole 40, which has a diameter that corresponds to the outer diameter of the shank 31 when sleeved the expansion sleeve 32, is initially drilled into the wall 4. Thereafter, with the expansion sleeve 32 disposed thereon, the shank 31 is driven into the blind hole 40 with the use of a tool, such as a mallet. In view of the stop section 315, wobbling of the shank 31 in the blind hole 40 can be arrested. By using a spanner to rotate the nut fastener 33 relative to the shank 31, a torque is generated so as to create a force for moving the shank 31 outwardly of the blind hole 40. At this time, movement of the shank 31 will cause the bosses 321 on the retaining plates 322 to engage the surface of the blind hole 40. Also, with further reference to Figure 6, as an increasing diameter of the expander section 313 extends into the expansion sleeve 32, in view of the curved distal edges 326 of the retaining plates 322, the expansion sleeve 313 will be guided relative to the expander section 313 to engage the longitudinal ribs 314 within the slits 322. As such, rotation of the expansion sleeve 32 relative to the expander section 313 can be arrested while the retaining plates 322 are being forced by the expander section 313 to expand in a radial outward direction for engaging the surface of the blind hole 40. Expansion of the retaining plates 322 can also be accomplished quickly in view of the larger angle formed by the surface of the expander section 313 with respect to the axis of the shank 31 and in view of the shorter arc lengths of the larger number of retaining plates 322 that form the expansion sleeve 32. Subsequently, the nut fastener 33 and the washer 34 are removed from the shank 31, and the bracket 30 is disposed on the shank 31. The nut fastener 33 and the washer 34 are again provided on the shank 31 for locking tightly the bracket 30 against the wall 4.

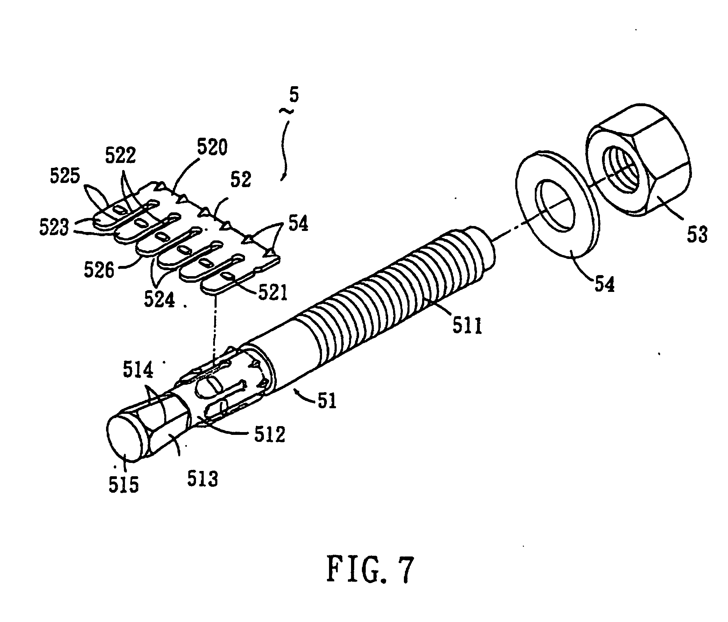

Referring to Figure 7, the second preferred embodiment of a wedge anchor 5 according to the present invention is shown to similarly comprise a shank 51, a tubular expansion sleeve 52, a nut fastener 53, and a washer 54. The shank 51 has threaded, neck, expander and stop sections 511, 512, 513, 515. The tubular expansion sleeve 52 is formed with slits 522, an annular base strip portion 520, and more than two retaining plates 523. Each retaining plate 523 has parallel lateral edges 525, a curved distal edge 526, and a boss 521. However, unlike the previous embodiment, the expander section 513 has a polygonal cross-section, and the longitudinal ribs 514 are formed at adjoining edges of adjacent sides of the expander section 513. In addition, the base strip portion 520 of the expansion sleeve 52 is formed with a plurality of teeth projections 54, each of which projects radially and outwardly relative to the shank 51 and tapers in a direction toward the retaining plates 523.

Some of the advantages associated with the wedge anchor 3, 5 of this invention are as follows:
1. The surface of the expander section 313, 513 of the shank 31, 51 of the wedge anchor 3, 5 is formed with longitudinal ribs 314, 514, and the expansion sleeve 32, 52 is formed with a plurality of retaining plates 323, 523 that are formed with bosses 321, 521 and that confine slits 322, 522 for engaging the longitudinal ribs 314, 514. When the nut fastener 33, 53 is rotated, since the shank 31, 51 is disposed tightly in the blind hole 40, the expander section 313, 513 will extend into the expansion sleeve 32, 52 such that the longitudinal ribs 314, 514 are disposed in the slits 322 to prevent rotation of the expansion sleeve 32, 52 with the shank 31, thereby ensuring proper expansion of the retaining plates 321, 521.
2. The expansion sleeve 32, 52 has more than two interconnected retaining plates 323, 523 that encircle the shank 31. Because the arc lengths of the retaining plates 323, 523 are relatively short, the retaining plates 323, 523 are less rigid. In addition, since the surface of the expander section 313, 513 is formed with an angle that is greater than 8° with respect to the axis of the shank 31, 51, a shorter distance will be required to be traveled by the shank 31, 51 for expanding the retaining plates 323, 523. Thus, the wedge anchor 3, 5 of this invention takes up a relatively short amount of time for fixing on a wall 4.
3. Because a relatively short expander section 313, 513 is needed to expand the retaining plates 323, 523, the shank 31, 51 of the wedge anchor 3, 5 has a lower material requirement as compared to the aforesaid conventional wedge anchor 1, thereby resulting in lower costs. In addition, a shorter length of the shank 31, 51 projects from the wall 4 due to the shorter distance traveled by the shank 31, 51 when expanding the retaining plates 323, 523. The shorter projecting length of the shank 31, 51 can facilitate subsequent bracket mounting and locking operations.

## Claims

1. A wedge anchor (3, 5) including
a shank (31, 51) having a threaded section (311, 511), a neck section (312, 512) extending forwardly and coaxially from one end of the threaded section (311, 511), and having a diameter smaller than that of the threaded section (311, 511), and an expander section (313, 513) extending forwardly and coaxially from one end of the neck section (312, 512), and having a cross-section that gradually decreases along an axis of the shank (31, 51) in a direction toward the threaded section (311, 511),
a tubular expansion sleeve (32, 52) shorter than the shank (31, 51) and sleeved on the neck section (312, 512), and
a nut fastener (33, 53) for engaging the threaded section (311, 511) of the shank (31, 51),
**characterized in that**:
the expander section (313, 513) has a surface that forms an angle (α) greater than 8° with respect to the axis of the shank (31, 51), and is further formed with a plurality of longitudinal ribs (314, 514) that project radially and outwardly, that extend along the axis of the shank (31, 51), and that are angularly spaced apart from each other;
the expansion sleeve (32, 52) being formed with a plurality of axially extending slits (322, 522) for engaging the longitudinal ribs (314, 514) on the expander section (313, 513) when the expander section (313, 513) is extended into the expansion sleeve (32, 52), the slits (322, 522) of the expansion sleeve (32, 52) being connected with an annular base strip portion (320, 520) and the sleeve having more than two retaining plates (323, 523), each having a base edge connected to the base strip portion (320, 520), a pair of parallel lateral edges (325, 525), and a curved distal edge (326, 526) that interconnects the lateral edges (325, 525) and that curves forwardly in a direction away from the base strip portion (320, 520), the lateral edges (325, 525) of adjacent ones of the retaining plates (322, 522) confining the slits (322, 522), the curved distal edges (326, 526) of the adjacent ones of the retaining plates (322, 522) cooperating to form entrances (324, 524) into the slits (322, 522), each of the retaining plates (322, 522) being formed with a boss (321, 521) that projects radially and outwardly with respect to the shank (31, 51), wherein each of the longitudinal ribs (314, 514) is engageable by one of the slits (322, 522) when the expander section (313, 513) is extended into the expansion sleeve (32, 52).

2. The wedge anchor (3, 5) of Claim 1, further **characterized in that** the angle (α) is between 10° and 22.5°.

3. The wedge anchor (3, 5) of Claim 2, further **characterized in that** the angle (α) is between 10° and 15°.

4. The wedge anchor (3) of Claim 1, further **characterized in that** the expander section (313) has a frusto-conical configuration.

5. The wedge anchor (5) of Claim 1, further **characterized in that** the expander section (513) has a polygonal cross-section, and that the longitudinal ribs (514) are formed at adjoining edges of adjacent sides of the expander section (513).

6. The wedge anchor (3, 5) of Claim 1, further **characterized in that** the shank (31, 51) has a stop section (315, 515) extending forwardly and coaxially from one end of the expander section (313, 513) and having a diameter equal to that of the threaded section (311, 511).

7. The wedge anchor (5) of Claim 1, further **characterized in that** the base strip portion (520) is formed with a plurality of teeth projections (54), each of which projects radially and outwardly relative to the shank (31, 51) and tapers in a direction toward the retaining plates (323, 523).

## Patentansprüche

1. Keilanker (3, 5) mit
einem Schaft (31, 51), der einen Gewindeabschnitt (311, 511), einen Halsabschnitt (312, 512), der von einem Ende des Gewindeabschnitts (311, 511) nach vorne und koaxial dazu vorsteht und der einen Durchmesser hat, der kleiner als jener des Gewindeabschnitts (311, 511) ist, und einen Expansionsabschnitt (313, 513) aufweist, der sich von dem einen Ende des Halsabschnitts (312, 512) nach vorne und
koaxial dazu erstreckt und der einen Querschnitt hat, der allmählich entlang der Achse des Schafts (31, 51) in Richtung zu dem Gewindeabschnitt (311, 511) hin abnimmt,
einer rohrförmigen Expansionshülse (32, 52), welche kürzer als der Schaft (31, 51) ist und welche auf dem Halsabschnitt (312, 512) angeordnet ist, und
einer Verriegelungsmutter (33, 53) zum Zusammenwirken mit dem Gewindeabschnitt (311, 511) des Schafts (31, 51),
**dadurch gekennzeichnet, dass**
der Expansionsabschnitt (313, 513) eine Fläche hat, die bezüglich der Achse des Schafts (31, 51) einen Winkel (α) von größer als 8° bildet, und ferner ausgebildet ist mit einer Mehrzahl von Längsrippen (314, 514) die radial nach außen vorstehen, die sich entlang der Achse des Schafts (31, 51) erstrecken und die im Winkelabstand voneinander angeordnet sind,
wobei die Expansionshülse (32, 52) mit einer Mehrzahl von sich axial erstreckenden Schlitzen (322, 522) ausgebildet ist zum In-Eingriff-Stehen mit den Längsrippen (314, 514) an dem Expansionsabschnitt (313, 513) wenn der Expansionsabschnitt (313, 513) sich in die Expansionshülse (32, 52) erstreckt,
wobei die Schlitze (322, 522) der Expansionshülse (32, 52) mit einem ringförmigen Basisstreifenabschnitt (320, 520) verbunden sind, wobei die Hülse aufweist mehr als zwei Halteplatten (323, 523), von denen jede einen mit dem Basisstreifenabschnitt (320, 520) verbundenen Basisrand hat, ein Paar von parallelen Seitenrändern (325, 525) und einen gekrümmten distalen Rand (326, 526), welcher die Seitenränder (325, 525) miteinander verbindet und welcher nach vorne in Richtung weg von dem Basisstreifenabschnitt (320, 520) gekrümmt ist, wobei die Seitenränder (325, 525) von benachbarten Halteplatten (322, 522) die Schlitze (322, 522) begrenzen, wobei die gekrümmten distalen Ränder (326, 526) von benachbarten Halteplatten (322, 522) zusammenwirken, um Eingänge (324, 524) in die Schlitze (322, 522) auszubilden,
wobei jede der Halteplatten (322, 522) mit einer Nase (321, 521) ausgebildet ist, welche bezüglich des Schafts (31, 51) radial nach außen vorsteht, wobei jede der Längsrippen (314, 514) mit einem der Schlitze (322, 522) in Eingriff bringbar ist, wenn der Expansionsabschnitt (313, 513) sich in die Expansionshülse (32, 52) erstreckt.

2. Keilanker (3, 5) gemäß Anspruch 1, ferner **dadurch gekennzeichnet, dass** der Winkel (α) zwischen 10° und 22,5° ist.

3. Keilanker (3, 5) gemäß Anspruch 2, ferner **dadurch gekennzeichnet, dass** der Winkel (α) zwischen 10° und 15° ist.

4. Keilanker (3) gemäß Anspruch 1, ferner **dadurch gekennzeichnet** dadurch, dass der Expansionsabschnitt (313) eine kegelstumpfförmige Konfiguration hat.

5. Keilanker (5) gemäß Anspruch 1, ferner **dadurch gekennzeichnet, dass** der Expansionsabschnitt (523) einen polygonalen Querschnitt hat und dass die Längsrippen (514) an angrenzenden Rändern von benachbarten Seiten des Expansionsabschnitts (513) ausgebildet sind.

6. Keilanker (3, 5) gemäß Anspruch 1, ferner **dadurch gekennzeichnet, dass** der Schaft (31, 51) einen Stopabschnitt (315, 515) aufweist, der sich von einem Ende des Expansionsabschnitts (315, 513) nach vorne und koaxial dazu erstreckt und der einen Durchmesser hat, der gleich jenem des Gewindeabschnitts (311, 511) ist.

7. Keilanker (5) gemäß Anspruch 1, ferner **dadurch gekennzeichnet, dass** der Basisstreifenabschnitt (520) mit einer Mehrzahl von Zahnvorsprüngen (54) ausgebildet ist, von denen jeder radial nach außen bezüglich des Schafts (31, 51) vorsteht und sich in Richtung zu den Halteplatten (323, 523) verjüngt.

## Revendications

1. Goujon d'ancrage (3, 5) incluant les éléments suivants : une tige (31, 51) dotée d'une partie filetée (311, 511), d'une partie formant collet (312, 512) qui s'étend vers l'avant et coaxialement à partir d'une extrémité de la partie filetée (311, 511) et ayant un diamètre plus petit que celui de la partie filetée (311, 511), ainsi qu'une partie d'expansion (313, 513) qui s'étend vers l'avant et coaxialement à partir d'une extrémité de la partie formant collet (312, 512) et ayant une section transversale qui diminue progressivement le long d'un axe de la tige (31, 51) dans un sens orienté vers la partie filetée (311, 511),
une gaine d'expansion tubulaire (32, 52) plus courte que la tige (31, 51) et recouvrant la partie formant collet (312, 512), et
une attache de type écrou (33, 53) permettant d'engager la partie filetée (311, 511) de la tige (31, 51),
**caractérisé en ce que** :
la partie d'expansion (313, 513) présente une surface formant un angle (α) supérieur à 8° par rapport à l'axe de la tige (31, 51), et elle est en outre formée d'une pluralité de nervures longitudinales (314, 514) qui font saillie radialement et vers l'extérieur, qui s'étendent le long de l'axe de la tige (31, 51) et qui sont espacées angulairement les unes des autres ;
la gaine d'expansion (32, 52) étant constituée d'une pluralité de fentes s'étendant axialement (322, 522) destinées à l'engagement des nervures longitudinales (314, 514) sur la partie d'expansion (313, 513) quand la partie d'expansion (313, 513) s'étend dans la gaine d'expansion (32, 52), les fentes (322, 522) de la gaine d'expansion (32, 52) étant raccordées à une partie de bande de base annulaire (320, 520) et la gaine possédant plus de deux plaques de rétention (323, 523), chacune présentant un bord de base raccordé à la partie de bande de base (320, 520), une paire de bords latéraux parallèles (325, 525) et un bord distal incurvé (326, 526) qui raccorde les bords latéraux (325, 525) et qui s'incurve vers l'avant dans un sens d'éloignement de la partie de bande de base (320, 520), les bords latéraux (325, 525) des plaques adjacentes parmi les plaques de rétention (323, 523) confinant les fentes (322, 522), les bords distaux incurvés (326, 526) des plaques adjacentes parmi les plaques de rétention (323, 523) coopérant pour former des entrées (324, 524) dans les fentes (322, 522), chacune des plaques de rétention (323, 523) étant dotée d'un bossage (321, 521) qui fait saillie radialement et vers l'extérieur par rapport à la tige (31, 51), goujon dans lequel chacune des nervures longitudinales (314, 514) peut s'engager dans l'une des fentes (322, 522) quand la partie d'expansion (313, 513) s'étend dans la gaine d'expansion (32, 52).

2. Goujon d'ancrage (3, 5) selon la revendication 1, **caractérisé en outre en ce que** l'angle (α) est compris entre 10° et 22,5°.

3. Goujon d'ancrage (3, 5) selon la revendication 2, **caractérisé en outre en ce que** l'angle (α) est compris entre 10° et 15°.

4. Goujon d'ancrage (3) selon la revendication 1, **caractérisé en outre en ce que** la partie d'expansion (313) présente une configuration tronconique.

5. Goujon d'ancrage (5) selon la revendication 1, **caractérisé en outre en ce que** la partie d'expansion (513) présente une section transversale polygonale et **en ce que** les nervures longitudinales (514) sont formées au niveau de bords adjoints de côtés adjacents de la partie d'expansion (513).

6. Goujon d'ancrage (3, 5) selon la revendication 1, **caractérisé en outre en ce que** la tige (31, 51) présente une partie de butée (315, 515) qui s'étend vers l'avant et coaxialement depuis une extrémité de la partie d'expansion (313, 513) et dont le diamètre est égal à celui de la partie filetée (311, 511).

7. Goujon d'ancrage (5) selon la revendication 1, **caractérisé en outre en ce que** la partie de bande de base (520) est constituée d'une pluralité de saillies formant dents (54) dont chacune fait saillie radialement et vers l'extérieur par rapport à la tige (31, 51) et se rétrécit dans un sens orienté vers les plaques de rétention (323, 523).
